# EUROPÄISCHE PATENTSCHRIFT

(11) **EP 3 735 737 B1**
(45) Veröffentlichungstag und Bekanntmachung des Hinweises auf die Patenterteilung: **31.08.2022**
(21) Anmeldenummer: 18826682.9
(22) Anmeldetag: 20.12.2018
(51) Int. Cl.: H02K 15/06, H02K 15/04

(54) **VERFAHREN UND VORRICHTUNG ZUR HERSTELLUNG VON ROTOREN UND STATOREN EINSCHLIESSLICH DER KONFEKTIONIERUNG VON ANSCHLUSSDRÄHTEN**
METHOD AND DEVICE FOR PRODUCING ROTORS AND STATORS INCLUDING THE PRODUCTION OF CONNECTION WIRES
PROCÉDÉ ET DISPOSITIF DE FABRICATION DE ROTORS ET DE STATORS, INCLUANT LA CONFECTION DE FILS DE CONNEXION

(30) Priorität: 02.01.2018 DE 102018100016
(43) Veröffentlichungstag der Anmeldung: 11.11.2020
(73) Patentinhaber: Schaeffler ELMOTEC STATOMAT GmbH, 61184 Karben (DE)
(72) Erfinder: SADIKU, Sadik, 63543 Neuberg (DE)
(74) Vertreter: Boult Wade Tennant LLP
(86) Internationale Anmeldenummer: PCT/EP2018/086316
(87) Internationale Veröffentlichungsnummer: WO 2019/134849

(56) Entgegenhaltungen:
- EP-A2- 0 963 031
- WO-A1-00/55960
- DE-A1-102010 034 180
- GB-A- 2 096 497
- US-A- 5 542 456
- US-A1- 2007 007 832

## Beschreibung

Die Erfindung betrifft ein Verfahren zur Herstellung von Rotoren und Statoren einschließlich der Konfektionierung von Anschlussdrähten gemäß Anspruch 1. Gegenstand der vorliegenden Erfindung ist auch eine Vorrichtung gemäß Anspruch 11 zur Durchführung eines solchen Verfahrens Üblicherweise weist ein solches Verfahren die folgenden Schritte auf:
- Wickeln der aus mehreren Einzeldrähten bestehenden Spulenwicklungen auf einem Drahtwickler, dem die Einzeldrähte über eine Drahtführung von einer Drahtzuführeinheit zugeführt werden,
- Ablegen der Spulenwicklungen in Einziehwerkzeugen,
- Einziehen der Spulenwicklungen in Nuten eines Stator- oder Rotorkörpers,
- phasenweises Zusammenfassen der Einzeldrähte zur Konfektionierung der Anschlussdrähte des jeweiligen Stators oder Rotors.

Dieses Verfahren hat den Nachtteil, dass es sich nur teilweise automatisieren lässt, weil das Greifen der Einzeldrähte und das Aufziehen oder Aufstecken der Aufsteckschläuche aufgrund der undefinierten Lage der Einzeldrähte manuell durchgeführt werden muss.

Bekannt ist es z.B. aus der WO 00/55960 A1 bereits beim Wickeln einer Spulenwicklung aus eines einzigen Draht dessen Ende zu fixieren und dann die Enden dieser einzelnen Drähte, die mehrere Spulenwicklungen zugeordnet sind, zueinander zu fixieren. Das gleichzeitige Wickeln mehrerer Drähte zur Bildung einer Spulenwicklung wird nicht erörtert.

Die US 5,542,456 A1, die EP 0 963 031 A2 und die GB 2 096 497 A zeigen weitere ähnliche Verfahren, bei denen die Spulenwicklungen jeweils nur aus einem einzelnen Draht gewickelt werden. Die Handhabung einzelner Drähte im Wege der Automatisierung ist relativ einfach. Aufgabe der Erfindung ist es, ein Verfahren und eine Vorrichtung der eingangs genannten Art bereitzustellen, das eine Automatisierung der Herstellung von Statoren oder Rotoren mit fertig konfektionierten Anschlussdrähten erlaubt.

Hauptmerkmale der Erfindung sind in den Ansprüchen 1 und 11 angegeben. Ausgestaltungen des Verfahrens sind Gegenstand der Ansprüche 2 bis 10, Weiterbildungen der Vorrichtung Gegenstand der Ansprüche 11 bis 16.

Das erfindungsgemäße Verfahren sieht vor, dass die Einzeldrähte jeder Spulenwicklung mit den Aufsteckschläuchen konfektioniert werden und vorzugsweise während, unmittelbar vor oder unmittelbar nach ihrem Durchtrennen im Bereich der Drahtführung zur Ausbildung von Wicklungsenden und Wicklungsanfängen aneinander festgelegt werden, die Wicklungsenden und Wicklungsanfänge jeder Wicklung nach dem Wickeln vor oder während des Ablegens in in bestimmten Positionen zu den Einziehwerkzeugen angeordneten ersten Positionshaltern festgelegt werden und beim Einziehen der Spulenwicklungen in den Stator oder Rotor die Wicklungsenden und -anfänge aus den ersten Positionshaltern in in bestimmten Positionen zu dem Statorkörper oder Rotorkörper angeordneten zweite Positionshaltern übergeben werden.

Das erfindungsgemäße Verfahren nutzt die in der Drahtzuführeinrichtung noch gegebene definierte Lage der Einzeldrähte einer Wicklung aus, um diese dann an dieser Stelle mittels geeigneter Mittel, auf die später noch näher eingegangen wird, zu fassen und miteinander zu einem Wicklungsanfang und/oder Wicklungsende aneinander festzulegen. Idealerweise werden gleichzeitig an der Trennstelle, an welcher zwei aufeinanderfolgende Spulenwicklungen im Bereich der Drahtzuführeinrichtung durch ein Trennwerkzeug getrennt werden, ein Wicklungsanfang und ein Wicklungsende erzeugt. Durch das Festlegen der Enden der Einzeldrähte aneinander werden die Wicklungsenden und -anfänge stabilisiert und eignen sich für ein automatisiertes Drahthandling. Auf diese Weise kann bis zur endgültigen Konfektionierung eines Stators oder Rotors eine definierte Position sichergestellt werden, so dass die Wicklungsenden und - anfänge im gesamten Prozess bis zum Anbringen von Anschlusslaschen für die elektrischen Anschlüsse der Stators oder Rotors jederzeit von einer geeigneten Handlingvorrichtung für den jeweils anstehenden Bearbeitungsschritt in definierter Lage gegriffen werden können.

In einer bevorzugten Ausführungsform der Erfindung ist vorgesehen, dass die Aufsteckschläuche vor dem Einziehen der Spulenwicklungen in den Stator- oder Rotorkörper auf die Wickelungsenden und/oder -anfänge aufgesteckt werden.

Den Schritt des Aufziehens bereits zu diesem frühen Zeitpunkt vorzusehen, hat den Vorteil, dass die Wicklungsenden und -anfänge zusätzlich stabilisiert werden und die Einzeldrähte über die Länge des Aufsteckschlauches innerhalb von diesem in einer definierten Lage gehalten werden. Ansonsten bestünde die Gefahr, dass sich Einzeldrähte beim Ablegen in dem Einziehwerkzeug oder beim Einziehen in die Statornuten verformen könnten, wodurch ein späteres, automatisiertes Aufziehen oder Aufstecken der Aufsteckschläuche erschwert sein könnte. Die frühzeitige Umhüllung der zusammengehörigen Einzeldrähte bietet auch den Vorteil, dass die Aufsteckschläuche in allen Verfahrensschritten eine günstige Angriffsfläche für jeweils zum Einsatz kommende Handlingvorrichtungen bieten.

Eine bevorzugte Weiterbildung des Verfahrens sieht vor, dass die Einzeldrähte der Wicklungsenden und/oder -anfänge vor dem Aufstecken der Aufsteckschläuche auf einen Durchmesser kompaktiert werden, der kleiner als der Innendurchmesser der Aufsteckschläuche ist. Das Kompaktieren ist so zu verstehen, dass die Einzeldrähte enger aneinander gepresst werden als es ich beim losen Beieinanderliegen der Einzeldrähte ergeben würde. Die Aufsteckschläuche, die meist auf einem elastischen Gewebe bestehen, aber auch aus einem homogenen elastischen Material bestehen können, können dadurch leichter auch die Wicklungsenden oder - anfänge aufgefädelt werden. Wenn die Enden der Einzeldrähte einmal in das Schlauchende eingefädelt sind, kann sich der Aufsteckschlauch kurzen Erweiterungsstellen des Gesamtdurchmessers der Einzeldrähte durch einzelne Ausbiegungen gut anpassen oder auch die ausbauchenden Einzeldrähte auf einen kleineren Gesamtdurchmesser beim Aufstecken zusammendrücken. Die zum Aufschieben erforderliche Kraft wird dadurch nicht wesentlich erhöht.

Besonders bevorzugt wird das Verfahren dahingehend weitergebildet, dass die Einzeldrähte zur Ausbildung der Wicklungsenden und/oder -anfänge miteinander verdrillt werden. Das Verdrillen hat gegenüber anderen Alternativen, wie z.B. dem Verschweißen oder Verkleben der Einzeldrähte oder dem Anbringen einer Manschette um die Einzeldrähte, den Vorteil, dass es sich sehr einfach automatisiert durchführen lässt und in den weiteren Verfahrensschritten keine Besonderheiten durch die Art der Verbindung der Einzeldrähte berücksichtigt werden müssen.

Das Verdrillen kann zum Beispiel in der Weise einfach durchgeführt werden, dass die Einzeldrähte im Bereich der Drahtzuführeinrichtung durch eine Einzeldrahtführung geführt werden, die um eine Drehachse parallel zur Drahtführrichtung drehbar ist. Die Einzeldrahtführung weist entsprechend der Anzahl der Einzeldrähte Führungen auf, die an einem gemeinsamen Halter angeordnet sind, der in der genannten Art und Weise drehbar ist. Damit lassen sich die Einzeldrähte miteinander verdrillen, indem die Einzeldrahtführung um einen geeigneten Drehwinkel gedreht wird, bis die gewünschte Verdrillung erreicht wird. Die drehbare Einzeldrahtführung ist hierzu in der Regel zwischen zwei starren Drahtführungen angeordnet, die den Gegenhalt bilden, so dass das Verdrillen nur in einem gewünschten Endbereich stattfindet, der die Wicklungsenden oder -anfänge ausbildet. Nach dem Verdrillen werden die Drähte dann im verdrillten Bereich durchtrennt, so dass eine Hälfte das Wicklungsende der vorausgehenden Wickelung und die andere Hälfte den Wicklungsanfang der nachfolgenden Wicklung bildet. Durch das Verdrillen werden die Einzeldrähte auch zu einer verjüngten Spitze als Beispiel für eine Kompaktierung geformt.

Die drehbare Einzeldrahtführung hat den weiteren Vorteil, dass mit ihr auch während eines Wickelvorgangs die Lage der Einzeldrähte zueinander um beispielsweise 180° gedreht werden kann. Es hat sich gezeigt, dass sich mit derartigen Spulenwicklungen die elektrischen Verluste der hergestellten Stators vermindern lassen.

Alternativ oder ergänzend zu der Kompaktierung der Einzeldrähte an den Enden der Wicklungsenden oder Wicklungsanfänge kann vorgesehen sein, dass der Innendurchmesser der Aufsteckschläuche an der Aufsteckseite vor dem Aufstecken auf die Wicklungsenden und/oder -anfänge aufgeweitet wird. Hierzu kann beispielsweise ein Konus in den Aufsteckschlauch eingesteckt werden, über dessen erweitertes Ende dann die ggf. kompaktierten Einzeldrähte der Wicklungsenden oder -anfänge in den jeweiligen Aufsteckschlauch eingeführt werden.

Eine zweckmäßige Weiterbildung des Verfahrens sieht vor, dass die Aufsteckschläuche zu den Wicklungsenden und/oder -anfängen mittels einer Zentriervorrichtung ausgerichtet werden, die in den jeweiligen Aufsteckschlauch eingeschoben wird. Durch dieses Aufspannen der Aufsteckschläuche sind diese einfacher zu handhaben und können ihre Form im Prozess auch nicht ändern, so dass die Prozesssicherheit erhöht wird.

Zur bevorzugten Weiterbildung des Verfahrensschrittes des Zentrierens ist vorgesehen, dass die Zentriervorrichtung einen beweglichen Greifer aufweist, mit welchem die Wicklungsenden oder -anfänge gegriffen und kompaktiert werden. Auf diese Weise wird durch die durch den Aufsteckschlauch geführten Greifer ein Ausrichten und ein Fixieren des Aufsteckschlauches relativ zu einem Wicklungsende oder Wicklungsanfang erreicht. Gleichzeitig vereinfacht der Greifer durch das Zusammendrücken und damit Kompaktieren der Einzeldrähte das Aufstecken, -ziehen oder -schieben des Aufsteckschlauches auf die Drähte.

Eine bevorzugte Weiterbildung zur Handhabung der Aufsteckschläuche sieht vor, dass die Aufsteckschläuche vor dem Aufstecken auf eine bestimmte Länge konfektioniert und in einem Magazin aufgenommen werden, durch welches die Position der Aufsteckschläuche relativ zu der Zentriervorrichtung definiert wird, z.B. indem dieses als Teil der Zentriervorrichtung ausgebildet ist.

Eine weitere bevorzugte Maßnahme zur Verbesserung des Handlings der Wicklungsenden und Wicklungsanfänge sowie des fertigen Stators besteht darin, dass die mit den Aufsteckschläuchen umhüllten Wicklungsenden und/oder -anfänge in jeweils mehreren zweiten Positionshaltern mit Bezug auf den Rotor- oder Statorkörper fixiert werden. Auf diese Weise können die Wicklungsenden und -anfänge in gekrümmten Kurven auf scheibenförmigen Ablagen abgelegt werden, die einem Stator- oder Rotorträger zugeordnet sind, in dem der mit den Spulenwicklungen bestückte Rotor oder Stator gehalten ist. Das definierte Ablegen erleichtert zum einen das maschinelle Wiederaufnehmen der Wicklungsenden und -anfänge und zum anderen kann der Durchmesser der scheibenförmigen Ablage verringert werden, so dass die Abmessungen des Statorträgers ingesamt reduziert werden können, was wiederum dessen Handling zu Gute kommt.

Grundsätzlich ist noch anzumerken, dass das Verfahren zunächst nur für einen Teil der Spulenwicklungen, zum Beispiel den Wicklungen einer Phase durchgeführt und dann für die übrigen Phasen oder verbleibenden Spulenwicklungen wiederholt werden kann.

Gegenstand der vorliegenden Erfindung ist auch eine Vorrichtung zur Durchführung des zuvor beschriebenen Verfahrens. Neben den Vorrichtungsmerkmalen:
- einer Drahtzuführeinrichtung zum parallelen Zuführen von Einzeldrähten, die gemeinsam eine Spulenwicklung für einen Stator oder Rotor eines Elektromotors bilden,
- eines Drahtwickler mit Wicklungsschablonen, auf welchen die Spulenwicklungen sukzessive gewickelt werden, wobei ein Schablonengreifer zum Halten der Anfänge der Einzeldrähte an dem Drahtwickler vorgesehen ist,
- einem Einziehwerkzeug zur Aufnahme der Spulenwicklungen nach dem Wickeln,
- eines Stator- oder Rotorträger zur Aufnahme eines Stator- oder Rotorkörpers,
- und einer Übertragungsvorrichtung zum Übertragen der Spulenwicklungen von dem Einziehwerkzeug in den Stator- oder Rotorkörper,
die aus dem Stand der Technik bekannt sind, wobei weiterhin wenigstens eine Verbindungsvorrichtung vorgesehen ist, mit welcher die Drahtanfänge und/oder -enden der Einzeldrähte miteinander zu Wicklungsenden oder -anfängen verbunden werden, und eine Zentriervorrichtung zum Ausrichten und eine Aufsteckvorrichtung zum Aufziehen von Aufsteckschläuchen auf das jeweilige Wicklungsende oder den jeweiligen Wicklungsanfang vorgesehen ist.

Die Zentriervorrichtung dient der Handhabung der in sich nur bedingt formstabilen Aufsteckschläuche, zu deren Ausrichtung in Bezug auf die Wicklungsenden und -anfänge sowie vor allem dazu, die Wicklungsenden und -anfänge durch die aufgesteckten Schläuche für weitere Prozessschritte noch besser handhabbar zu machen.

Durch diese Ergänzung werden aus den bislang schwer kontrollierbaren abgeschnittenen Einzeldrähten an den Enden und Anfängen der Wicklungen maschinell handhabbare Wicklungsenden und -anfänge geformt, die den Einsatz geeigneter Greifer zur Automatisierung von Einzelschritten im Herstellungsvorgang eines Stators oder Rotors ermöglichen.

In einer bevorzugten Weiterbildung der erfindungsgemäßen Vorrichtung ist vorgesehen, dass die Verbindungsvorrichtung eine Einzeldrahtführung im Bereich der Drahtzuführeinrichtung aufweist, die um eine Drehachse parallel zur Zuführrichtung der Einzeldrähte zum Drahtwickler drehbar ist.

Die drehbare Einzeldrahtführung kann zunächst die Aufgabe erfüllen, durch eine Rotation die gewünschte Verdrillung der Einzeldrähte herbeizuführen. Hierbei werden die erzeugten Wicklungsenden und -anfänge auch in vorteilhafter Weise verjüngt, d.h. kompaktiert.

Eine besonders bevorzugte Weiterbildung der Vorrichtung sieht vor, dass in definierter Lage zu den Einziehwerkzeugen erste Positionshalter für die Wicklungsenden und Wicklungsanfänge und in definierter Lage zu der Übertragungsvorrichtung zweite Positionshalter für die Wicklungsanfänge und Wicklungsenden vorgesehen sind.

Ein bevorzugte Weiterbildung der Zentriervorrichtung sieht vor, dass diese einen Greifer zum Greifen und Kompaktieren der Wicklungsenden oder Wicklungsanfänge aufweist, der durch den Innendurchmesser der Aufsteckschläuche durchführbar ist. Diese Ausführungsform bietet den Vorteil, dass sie gleichzeitig der Stabilisierung der Aufsteckschläuche und der relativen Ausrichtung von diesen zu den Wicklungsenden- und anfängen dient.

Eine weitere bevorzugte Ausgestaltung der Aufsteckvorrichtung sieht vor, dass diese wenigstens einen Mitnehmer zum Greifen und Aufziehen oder Aufstecken der Aufsteckschläuche auf die Wicklungsenden oder -anfänge aufweist. Nachdem der Greifer den Aufsteckschlauch ausgerichtet und das jeweilige Wicklungsende oder den jeweiligen Wicklungsanfang fixiert hat, greifen die Mitnehmer den Aufsteckschlauch und schieben ihn über den Greifer und das verjüngte Ende auf das jeweilige Wicklungsende oder den jeweiligen Wicklungsanfang. Die Mitnehmer können zangenartig ausgebildet sein und den Schlauch reibschlüssig mitnehmen, bei einem Gewebeschlauch oder auch einem gummiartigen Schlauch können aber kleine kurze Vorsprünge für eine formschlüssige Mitnahme sorgen.

Eine bevorzugte Weiterbildung des Greifers kann vorsehen, dass dieser eine Zangenvorrichtung und ein axial zur Zangenvorrichtung bewegliches Betätigungsrohr aufweist, das durch axiales Zustellen die Zangenvorrichtung in eine Schließstellung bewegt. Diese Ausführungsform baut im Durchmesser sehr kompakt und lässt sich auf den Durchmesser der Aufsteckschläuche abstimmen, wobei das Betätigungsrohr unmittelbar zur Zentrierung des ihn umgebenden Aufsteckschlauches genutzt werden kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 eine schematische Ansicht einer Vorrichtung zur Herstellung von Spulenwicklungen;
Fig. 2 eine Ansicht eines Einziehwerkzeuges zur Aufnahme von Spulenwicklungen;
Fig. 3 eine schematische Ansicht des Übergabevorgangs der Spulenwicklungen vom Drahtwickler an das Einziehwerkzeug;
Fig. 4 eine schematische Draufsicht auf einen Spulenteller des Einziehwerkzeuges mi einer übergebenen Spulenwickung;
Fig. 5 eine schematische Seitenansicht einer Vorrichtung zur Bestückung der Wicklungsenden und -anfänge mit Aufsteckschläuchen;
Fig. 6 eine Detailansicht einer Zentriervorrichtung der Bestückungsvorrichtung;
Fig. 7 eine schematische Draufsicht auf die Zentriervorrichtung;
Fig. 8 einen schematischen Schnitt einer ersten Ausführungsform eines Greifers der Zentriervorrichtung;
Fig. 9 einen schematischen Schnitt einer zweiten Ausführungsform eines Greifers der Zentriervorrichtung in halb geschlossener Stellung;
Fig. 10 einen Schnitt des Greifers nach Fig. 9 in der geöffneten Stellung;
Fig. 11 einen schematischen einer weiteren Ausführungsform eines Greifers der Zentriervorrichtung;
Fig. 12 eine schematische Ansicht des Einziehens der Spulenwicklungen in einen Statorkörper;
Fig. 13 eine Ansicht des Statorträgers aus Fige. 12 von unten mit einem Positionierungsgreifer.

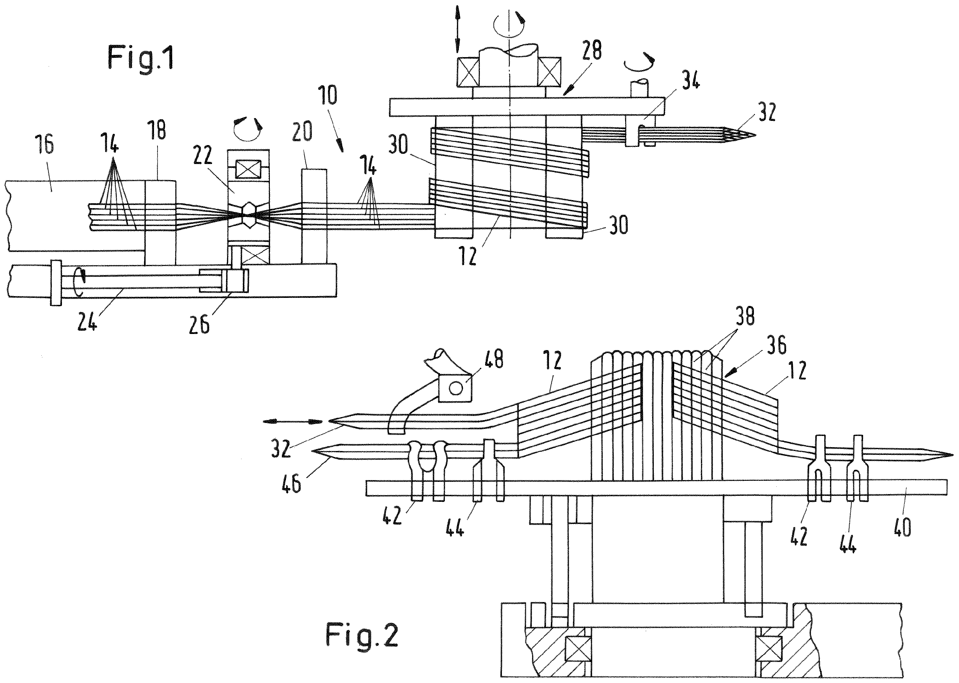

In Fig. 1 ist eine Vorrichtung 10 zum Wickeln von Spulenwicklungen 12 aus Einzeldrähten 14 gezeigt. Bei dem gezeigten Ausführungsbeispiel bilden jeweils sechs Einzeldrähte 14 eine Spulenwicklung 12. Die sechs Einzeldrähte 14 werden über eine geeignete und an sich bekannte Drahtzuführeinheit 16 zugeführt, die die Einzeldrähte 14 von nicht gezeigten Drahtvorratsspulen abzieht. Die Einzeldrähte 14 werden über eine erste feststehende Drahtführung 18 und eine zweite feststehende Drahtführung 20 geführt, wobei zwischen den beiden feststehenden Drahtführungen 18, 20 eine mit Bezug auf die Zuführrichtung drehbare Einzeldrahtführung 22 angeordnet ist. Der Antrieb ist schematisch durch eine Antriebswelle 24 veranschaulicht, die über ein Zahnradgetriebe 26 die drehbare Einzeldrahtführung 22 antreibt. Weiterhin weist die Drahtzuführeinrichtung 16 eine an sich bekannt e und daher nicht gezeigte Trennvorrichtung im Bereich der drehbaren Einzeldrahtführung 22 auf.

Das Wickeln der Wickelspulen selbst erfolgt mit Hilfe eines an sich bekannten Drahtwicklers 28 mit einer verstellbaren Wickelschablone 30, um die die Einzeldrähte durch eine Drehbewegung des gesamten Drahtwicklers 28 gewickelt werden. Ein Wicklungsanfang 32 der Spulenwicklung ist dabei an einem mit dem Drahtwickler 28 rotierenden Schablonendrahthalter 34 fixiert.

Fig. 2 zeigt ein bewegliches Einziehwerkzeug 36, das eine Vielzahl kranzförmig angeordneter Einziehlamellen 38 aufweist, in die die Spulenwicklungen 12 abgelegt werden. Das Einziehwerkzeug 36 weist außerdem einen Spulenteller 40 auf, der im Unterschied zu bekannten Ausführungsformen von Einziehwerkzeugen mit ersten Positionierhaltern 42, 44 für Wicklungsenden 46 und die bereits erwähnten Wicklungsanfänge 32 ausgebildet ist. Das gesamte Einziehwerkzeug 36 ist relativ zu dem Drahtwickler 28 drehbar und axial beweglich, wobei der Spulenteller 40 zu den Einziehlamellen 38 axial verstellbar sein kann. Auf den Antriebsmechanismus 46 zur Verstellung des Spulentellers 40 und/oder der Einziehlamellen 38 wird hier nicht näher eingegangen.

In Fig. 2 ist auch ein erster Handlinggreifer 48 gezeigt, der die zunächst in dem Schablonendrahthalter 34 gehaltenen Wicklungsanfänge 32 dort entnehmen und an einen ersten Positionierhalter 44 für einen Wicklungsanfang 32 übergeben kann.

Der Wicklungsvorgang läuft so ab, dass zunächst ein durch den drehbaren Einzeldrahthalter 22 erzeugter Wicklungsanfang 32 in dem Schablonendrahthalter 34 verklemmt wird. Anschließend wird der Drahtwickler 28, der auch doppelt oder mehrfach zum gleichzeitigen Wickeln mehrerer Spulenwicklungen 12 vorhanden sein kann, gedreht, bis die gewünschte Windungszahl der sechs Einzeldrähte 14 auf der Wickelschablone 30 aufgewickelt ist. Zwischen den einzelnen Windungen kann der drehbare Einzeldrahthalter 22 einmalig oder mehrmals um 180° gedreht werden, so dass die Anordnung der nebeneinander liegenden Einzeldrähte 14 getauscht wird.

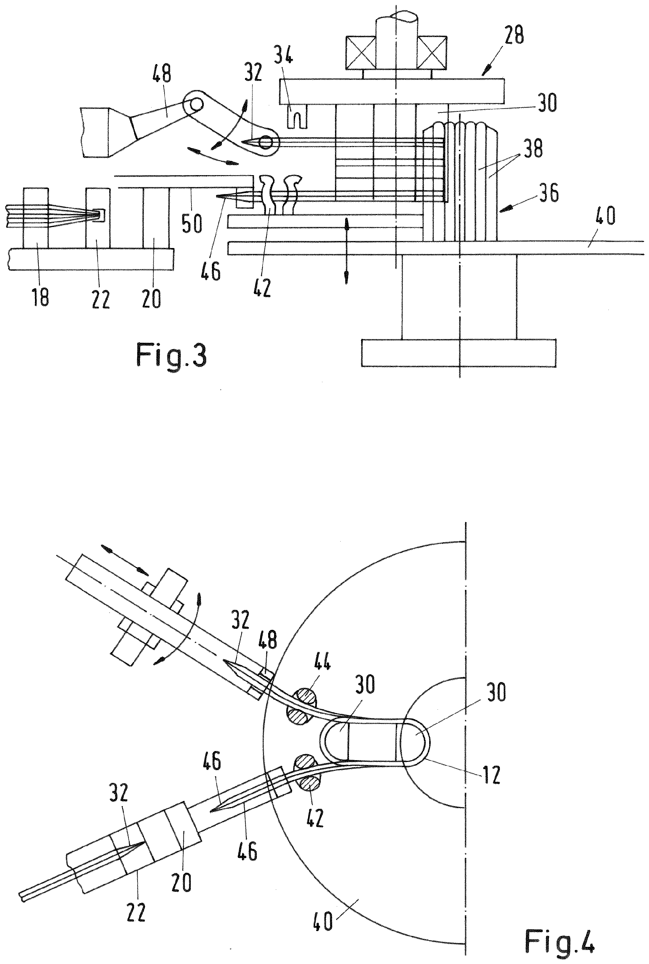

Nach Abschluss des Wickelvorgangs wird der drehbare Einzeldrahthalter 22 zum Verdrillen der Drähte um einen geeigneten Drehwinkel gedreht, der 360° oder mehr betragen kann. Anschließend werden die Einzeldrähte im Bereich der drehbaren Einzeldrahthalterung 22 gedreht, so dass gleichzeitig ein Wicklungsende 46 der soeben gewickelten Spulenwicklung 12 und ein Wicklungsanfang 32 der als nächstes zu wickelnden Spulenwicklung 12 erzeugt wird. Es schließt sich dann die Übergabe der erzeugten Spulenwicklung 12 an das Einziehwerkzeug 36 an, die in Fig. 3 veranschaulicht ist.

In Fig. 3 sind auch noch die beiden feststehenden Drahtführungen 18, 20 und die dazwischen angeordnete drehbare Einzeldrahtführung 22 gezeigt, die hier den bereits separierten, verdrillten Wicklungsanfang 32 der nachfolgenden Spulenwicklung 12 hält. Das Wicklungsende 46 der zuvor gewickelten Spulenwicklung 12 ist von einem zweiten Handlinggreifer 50 bereits gegriffen worden, der das Wicklungsende 46 in einem davor vorgesehenen ersten Positionierungshalter 42 verklemmt, während der erste Handlinggreifer 48 den Wicklungsanfang 32 aus dem Schablonendrahthalter 34 entnimmt und in dem ersten Positionierungshalter 44 für den Wicklungsanfang 32 verklemmt. Die Lage der beiden Positionierungshalter 42, 44 für das Wicklungsende 46 bzw. den Wicklungsanfang 32 auf dem Spulenteller 40 ergibt sich aus der Draufsicht gemäß Fig. 4, die auch die beiden Handlinggreifer 48, 50 zeigt. Im Übrigen ist die in Fig. 4 gezeigte Spulenwicklung 12 nur beispielhaft zu verstehen. Durch geeignete Wickelschablonen, die axial verstellbar sind, lassen sich mit einem entsprechenden Drahtwickler beispielsweise auch zwei miteinander bereits verdrahtete Spulenwicklungen 12 wickeln, die dann gemeinsam in dem Einziehwerkzeug abgelegt werden. Dies bedeutet, dass die Wicklungsanfänge und - enden dieser Spulenwicklungen bereits verbunden sind, so dass nur das Wicklungsende einer der beiden Spulenwicklungen und der Wicklungsanfang der anderen Spulenwicklung in den ersten Positionierungshaltern 42, 44 verklemmt werden müssen. Diese liegen dann in der Regel in einem größeren Winkelabstand zueinander als in Fig. 4 gezeigt.

In Fig. 3 ist auch der an sich in üblicher Weise ablaufende Vorgang des Ablegens der Spulenwicklungen 12 in dem Einziehwerkzeug 36 veranschaulicht, indem das Einziehwerkzeug 36 axial in Richtung der ausgerichteten Wickelschablone 30 des Drahtwicklers 28 bewegt wird.

Nach dem Ablegen der gewickelten Spulenwicklung 12 im Einziehwerkzeug 36 kann die nächste Spulenwicklung 12 mittels des Drahtwicklers 28 gewickelt werden, so dass Zeit zur Verfügung steht, die durch das Verdrillen miteinander verbundenen Einzeldrähte 14 über eine gewünschte Länge mit einem Aufsteckschlauch 52 zu überziehen, was bislang als manueller Vorgang durchgeführt werden musste.

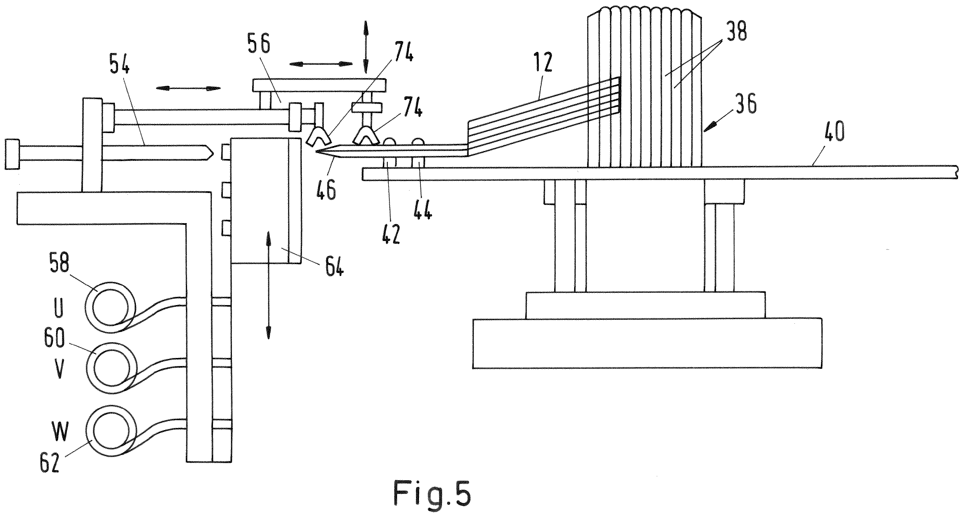

Das Aufstecken der Aufsteckschläuche 52 ist in Fig. 5 bis 11 veranschaulicht. Fig. 5 zeigt das Einziehwerkzeug 36 mit einer darin abgelegten Spulenwicklung 12, deren Wicklungsanfang 32 und -ende 46 in den ersten Positionierungshaltern 42, 44 abgelegt sind. Es sind eine Zentriervorrichtung 54 und eine Aufsteckvorrichtung 56 gezeigt, die dazu dienen, die Aufsteckschläuche 52 mit einer bestimmten Länge auf die Wicklungsenden 46 und Wicklungsanfänge 32 zu stecken. Hierzu werden zunächst die Aufsteckschläuche 52 von Vorratsrollen 58, 60, 62 abgezogen, in ein Magazin 64 überführt und auf eine gewünschte Länge vom Schlauchvorrat abgeschnitten. Dabei nehmen die derart konfektionierten Aufsteckschläuche 52 bereits eine vordefinierte Position in dem Magazin 64 ein. Sofern keine farbliche Unterscheidung, beispielsweise nach Phasenzugehörigkeit der zu umhüllenden Enden der Wicklungen gewünscht ist, kann auch eine einzige Schlauchfarbe verwendet werden.

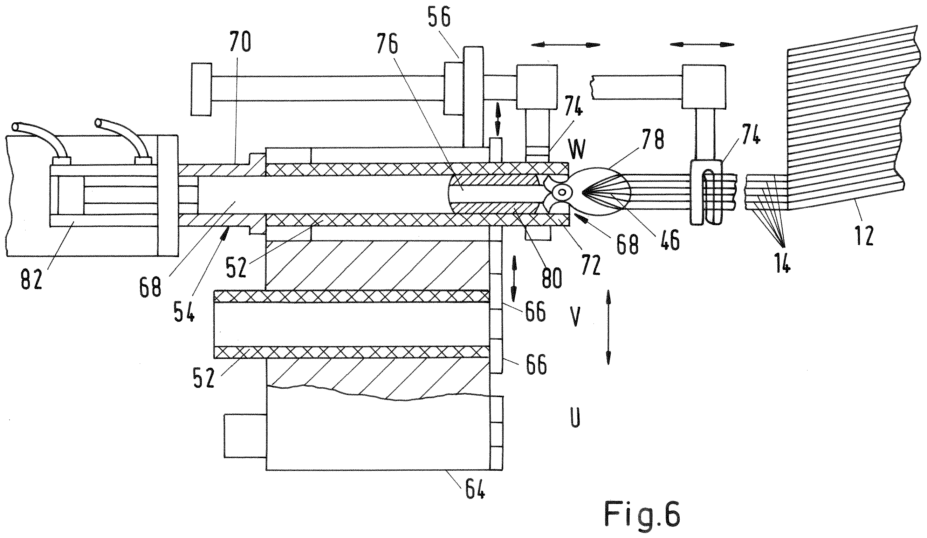

Das Magazin 64 kann senkrecht in Bezug auf die Ausrichtung der Aufsteckschläuche 52 verlagert werden, so dass der gewünschte Aufsteckschlauch in Flucht zu der Zentriervorrichtung 54 gelangen kann. Hierzu wird im Folgenden auf Fig. 6 verwiesen. In Fig. 6 ist das Magazin 64 teilgeschnitten dargestellt, wobei es mit drei Aufsteckschläuchen unterschiedlicher Farbcodierung bestückt ist. Während die im Sinne der Darstellung unteren beiden Aufsteckschläuche durch eine bewegliche Arretierung 66 in dem Magazin gesichert sind, ist der oberste Aufsteckschlauch 52 fluchtend zu der Zentriervorrichtung 54 und dem verdrillten Wicklungsende 46 ausgerichtet. Das Wicklungsende 46 oder ein mit einem Aufsteckschlauch zu versehender Wicklungsanfang 32 werden auch durch geeignetes Drehen und falls erforderlich Verstellen der Höhenlage des Spulentellers 40 ausgerichtet.

In der in Fig. 6 gezeigten Stellung ist auch bereits ein Greifer 68 in den aufzuziehenden Aufsteckschlauch 52 eingeschoben worden. Ein Schieber 70 hat nach dem Öffnen der betreffenden Arretierung 66 den Aufsteckschlauch auch bereits um ein Wegstück aus dem Magazin herausgeschoben, wobei das aus dem Magazin 64 hervorstehende Schlauchende 72 durch einen Mitnehmer 74 der Aufsteckvorrichtung 56 axial verklemmt sein kann.

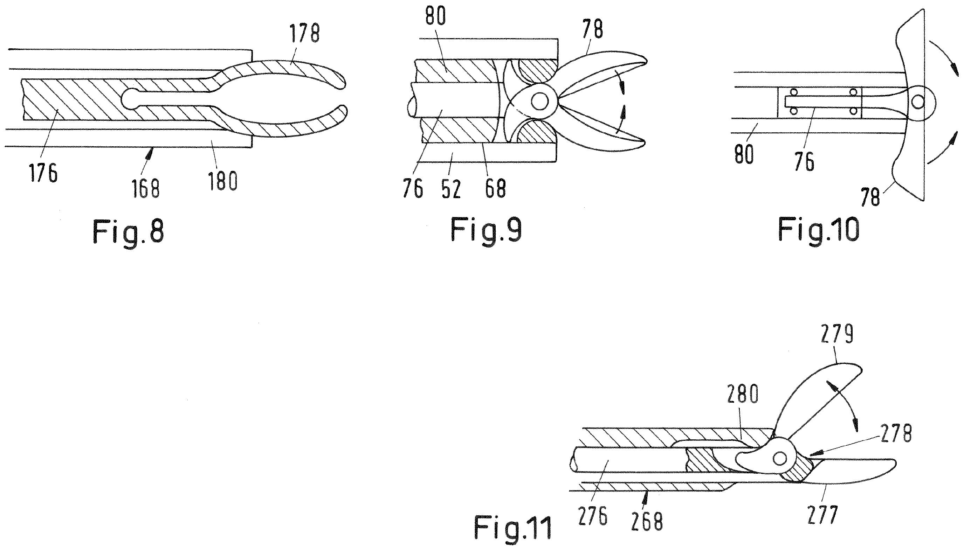

Der in den Aufsteckschlauch 52 eingeschobene Greifer 68 besitzt bei der gezeigten Ausführungsbeispiel einen Lagerdorn 76, eine daran gelenkig gelagerten Zangenvorrichtung 78 sowie ein den Lagerdorn umfassendes Betätigungsrohr 80, das auf die Zangenvorrichtung wirkt. Dieser Greifer ist in Fig. 9 und 10 näher veranschaulicht. Das Betätigungsrohr 80 ist von dem Dorn 76 getrennt axial beweglich, wozu eine nicht näher erläuterte Betätigungsvorrichtung 82 vorgesehen ist, die z.B. mit pneumatischen Stellzylindern arbeitet. In Fig. 6 ist die Zangenvorrichtung 78 in einer Schließstellung gezeigt, in der sie das hier gezeigte Wicklungsende 46 fixiert und die Einzeldrähte 14 zusammendrückt, so dass deren Durchmesse kleiner als der Innendurchmesser des auf dem Betätigungsrohr 80 mit leichtem Spiel sitzenden Aufsteckschlauches 52 ist.

Die Zangenvorrichtung 78 befindet sich beim Einschieben in den Aufsteckschlauch in einem bezüglich ihres Außendurchmessers minimierten Schließzustand, wobei die Zangenvorrichtung z.B. durch eine Rückstellfeder in einem maximal geöffneten Zustand überführt wird, wenn das Betätigungsrohr 80 um ein bestimmtes Wegstück zurückgezogen wird (siehe Fig. 10). Durch axiales Verstellen des Betätigungsrohres 80 relativ zu dem Lagerdorn 76 (siehe Fig. 9) wird nun die Zangenvorrichtung 78 geschlossen, wobei diese das Wicklungsende 46 oder den Wicklungsanfang 32 greift, zu dem Aufsteckschlauch 52 zentriert und kompaktiert.

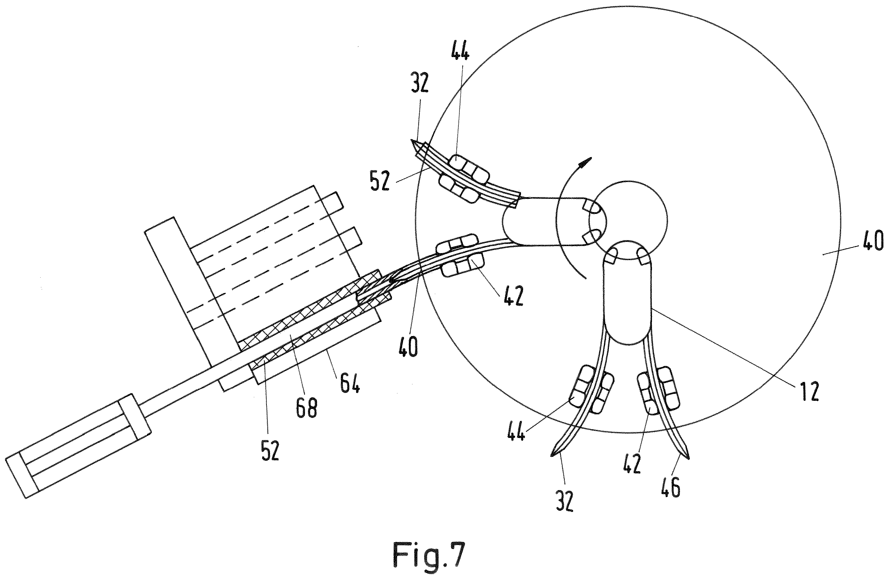

Nach diesem Vorgang wird der Mitnehmer 74 der Aufsteckvorrichtung 56 axial verlagert, wobei er den Aufsteckschlauch 52 reibschlüssig oder durch zahnartige Vorsprünge (nicht gezeigt), die in das Gewebe oder das elastische Material des jeweils zum Einsatz kommenden Schlauches eingreifen, formschlüssig mitnimmt, bis der gesamte Aufsteckschlauch 52 auf das Wicklungsende 46 aufgezogen ist. Nachdem das Wicklungsende 46 mit einem Aufsteckschlauch 52 versehen worden ist, wir der Vorgang für den Wicklungsanfang 32 nach einem entsprechenden Drehen des Spulentellers 40 (siehe Fig. 7) wiederholt, wobei die Bestückung auch in umgekehrter Reihenfolge erfolgen kann.

In Fig. 8 und 11 sind noch zwei weitere Ausführungsbeispiele für Greifer 168 bzw. 268 gezeigt. Bei dem in Fig. 8 gezeigten Greifer 168 ist die Zangenvorrichtung 178 einstückig mit dem Lagerdorn 176 als ein Art Federgabel ausgebildet, deren Vorspannung bestrebt ist, die Zangenvorrichtung 178 in den geöffneten Zustand zu bewegen. Durch eine Relativbewegung des Betätigungsrohres 180 kann die Zangenvorrichtung 178 dann gegen die Rückstellkraft der Federgabel geschlossen werden.

In Fig. 11 ist ein Greifer 268 gezeigt, bei dem das Betätigungsrohr 280 nur auf eine Zange 279 der Zangenvorrichtung 278 wirkt, während die zweite Zange 277 starr mit dem Lagerdorn 276 ausgebildet ist.

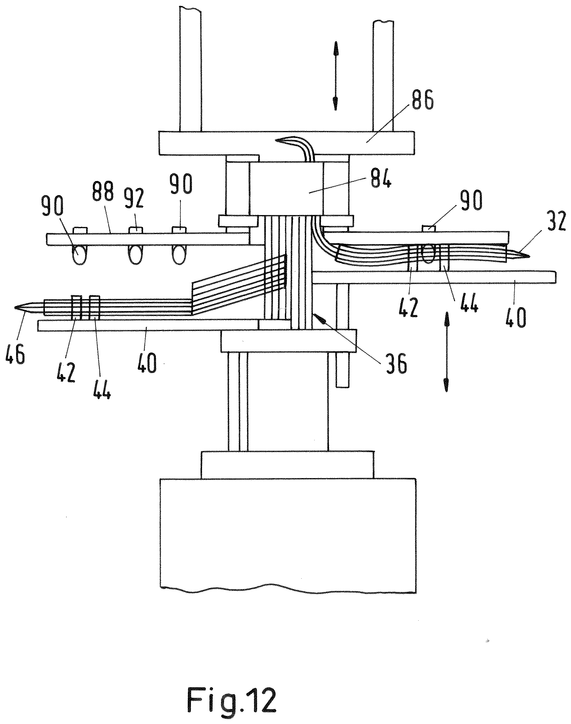

In Fig. 12 ist das an sich bekannte Einziehen der Spulenwicklungen in die Nuten (nicht einzeln gezeigt) eines Statorkörpers 84 veranschaulicht. Während das Einziehen selbst bekannten Abläufen folgt und daher hier nicht näher erläutert werden soll, ist an einem Statorträger 86, der den Statorkörper 84 in einer definierten Position hält, eine scheibenförmige Ablage 88 mit zweiten Positionierungshaltern 90, 92 vorgesehen, die beim Einziehen der Spulenwicklungen 12 in den Statorträger 84 die in den ersten Positionierungshaltern 42, 44 verklemmten Wicklungsenden 46 und Wicklungsanfänge 32 übernehmen und verklemmen. Hierbei ist es hilfreich, dass die Wicklungsenden 46 und -anfänge 32 bereits mit den Aufsteckschläuchen 52 umhüllt sind, so dass sichergestellt ist, dass auch alle Einzeldrähte 14 in die zweiten Positionierungshalter 90, 92 übergeben werden. Dies kann durch aktiv zwischen ein gelösten Stellung und einer Klemmstellung verstellbare erste 42, 44 und/oder zweite 90, 92 Positionierungshalter erfolgen oder durch abgestimmte Klemmkräfte in passiven Halterungen.

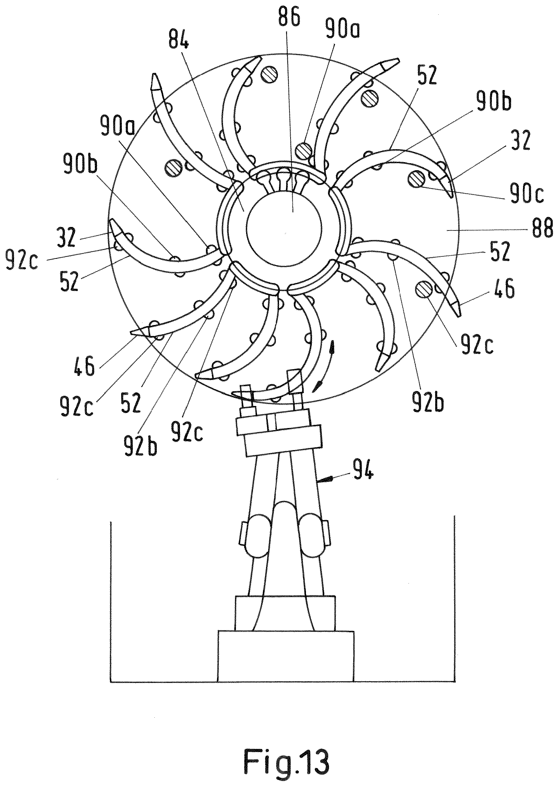

In Fig. 12 ist auch zu erkennen, dass der Spulenteller 40 des Einziehwerkzeuges 36 sehr nah an die scheibenförmige Ablage 88 des Statorträgers 86 herangefahren werden sollte, wozu erforderlichenfalls eine von den Einziehlamellen 38 gesonderte axiale Verstellung des Spulentellers 40 hilfreich sein kann. Es ist aber auch möglich, die Wicklungsenden und -anfänge mit Robotergreifern zu übergeben. Weiterhin ist in Fig. 12 zu erkennen, dass der Durchmesser der scheibenartigen Ablage 88 kleiner ist als der Durchmesser des Spulentellers 40. Unter Verweis auf Fig. 13 ist dies dadurch ermöglicht, dass die zweiten Positionierungshalter 90, 92 mehrfach ausgebildet sind, wobei die Wicklungsenden und -anfänge gekrümmt in Kurven abgelegt werden, die ihre radiale Erstreckung verkleinern. Das gezielte Ablegen in den hier jeweils drei Positionierungshaltern 90 a, b, c und 92 a, b, c für jedes Wicklungsende 46 und jeden Wicklungsanfang 32 erfolgt mittels einer Robotergreifvorrichtung 94. Das Ablegen in drei Positionierungshaltern pro Wicklungsanfang und Wicklungsende hat neben dem möglichen verkleinerten Durchmesser der scheibenförmigen Ablage 88 des Statorträgers 86, der die Handhabung des bestückten Statorträgers 86 in weiteren Prozessschritten vereinfacht, auch den weiteren Vorteil, dass die Wicklungsenden 46 und -anfänge 32 in einer noch genauer definierten Position abgelegt sind, so dass das Greifen in weiteren Prozessschritten, z.B. zum Anschweißen von elektrischen Verbindungslaschen, vereinfacht wird.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 10 | Wickelvorrichtung | 70 | Schieber |
| 12 | Spulenwicklung | 72 | Schlauchende |
| 14 | Einzeldrähte | 74 | Mitnehmer |
| 16 | Drahtzuführeinrichtung | 76 | Lagerdorn |
| 18 | erste feststehende Drahtführung | 78 | Zangenvorrichtung |
| 20 | zweite feststehende Drahtführung | 80 | Betätigungsrohr |
| 22 | drehbare Einzeldrahtführung | 82 | Betätigungsvorrichtung |
| 24 | Antriebswelle | 84 | Statorkörper |
| 26 | Zahnradgetriebe | 86 | Statorträger |
| 28 | Drahtwickler | 88 | scheibenförmige Ablage |
| 30 | Wickelschablone | 90 | zweite Positionierungshalter |
| 32 | Wicklungsanfang | 92 | zweite Positionierungshalter |
| 34 | Schablonendrahthalter | 94 | Robotergreifvorrichtung |
| 36 | Einziehwerkzeug | 168 | Greifer |
| 38 | Einziehlamellen | 176 | Lagerdorn |
| 40 | Spulenteller | 178 | Zangenvorrichtung |
| 42 | erste Positionierungshalter | 180 | Betätigungsrohr |
| 44 | erste Positionierungshalter | 268 | Greifer |
| 46 | Wicklungsende | 276 | Lagerdorn |
| 48 | erster Handlinggreifer | 277 | zweite Zangenhälfte |
| 50 | zweiter Handlinggreifer | 278 | Zangenvorrichtung |
| 52 | Aufsteckschläuche | 279 | erste Zangenhälfte |
| 54 | Zentriervorrichtung | 280 | Betätigungsrohr |
| 56 | Aufsteckvorrichtung | | |
| 58 | erste Schlauchrolle | | |
| 60 | zweite Schlauchrolle | | |
| 62 | dritte Schlauchrolle | | |
| 64 | Magazin | | |
| 66 | Arretierung | | |
| 68 | Greifer | | |

## Patentansprüche

1. Verfahren zur Herstellung von Rotoren und Statoren von Elektromotoren einschließlich der Konfektionierung von Anschlussdrähten, das die folgenden Schritte aufweist:
- Wickeln der aus mehreren Einzeldrähten (14) bestehenden Spulenwicklungen (12) auf einem Drahtwickler (28), dem die Einzeldrähte (14) über eine Drahtführung 18, 20, 22) von einer Drahtzuführeinheit (16) zugeführt werden,
- Ablegen der Spulenwicklungen (12) in einem Einziehwerkzeug (36),
- Einziehen der Spulenwicklungen (12) in Nuten eines Stator- (84) oder Rotorkörpers,
- phasenweises Zusammenfassen der Einzeldrähte (14)
- Konfektionieren der Anschlussdrähte des jeweiligen Stators oder Rotors durch Aufstecken von Aufsteckschläuchen (52) mittels einer Zentriervorrichtung (54) und Aufsteckvorrichtung (56),
**wobei** die Einzeldrähte (14) jeder Spulenwicklung (12) im Bereich der Drahtführung (18, 20, 22) zur Ausbildung von Wicklungsenden (46) und Wicklungsanfängen (32) aneinander festgelegt werden, die Wicklungsenden (46) und Wicklungsanfänge (32) jeder Spulenwicklung 12) nach dem Wickeln vor oder während des Ablegens in in bestimmten Positionen zu dem Einziehwerkzeug angeordneten ersten Positionshaltern (42, 44) festgelegt werden und beim Einziehen der Spulenwicklungen (12) in den Stator oder Rotor die Wicklungsenden (46) und -anfänge (32) aus den ersten Positionshaltern (42, 44) in in bestimmten Positionen zu dem Statorkörper (84) oder Rotorkörper angeordneten zweite Positionshalter (90, 92) übergeben werden.

2. Verfahren nach Anspruch 1, **dadurch gekennzeichnet, dass** die Aufsteckschläuche (52) vor dem Einziehen der Spulenwicklungen (12) in den Stator- (84) oder Rotorkörper auf die Wickelungsenden (46) und/oder -anfänge (32) aufgesteckt werden.

3. Verfahren nach Anspruch 1 oder 2, **dadurch gekennzeichnet, dass** die Einzeldrähte (14) der Wicklungsenden (46) und/oder -anfänge (32) vor dem Aufstecken der Aufsteckschläuche (52) auf einen Durchmesser kompaktiert werden, der kleiner als der Innendurchmesser der Aufsteckschläuche (52) ist.

4. Verfahren nach einem der vorhergehenden Ansprüche, **dadurch gekennzeichnet, dass** die Einzeldrähte(14) zur Ausbildung der Wicklungsenden (46) und/oder -anfänge (32) miteinander verdrillt werden.

5. Verfahren nach einem der vorhergehenden Ansprüche, **dadurch gekennzeichnet, dass** die Einzeldrähte (14) im Bereich der Drahtzuführeinrichtung (16) durch eine Einzeldrahtführung (22) geführt werden, die um eine Drehachse parallel zur Drahtführrichtung drehbar ist.

6. Verfahren nach einem der vorhergehenden Ansprüche, **dadurch gekennzeichnet, dass** der Innendurchmesser der Aufsteckschläuche (52) an der Aufsteckseite vor dem Aufstecken auf die Wicklungsenden (46) und/oder -anfänge (32) aufgeweitet wird.

7. Verfahren nach einem der vorhergehenden Ansprüche, **dadurch gekennzeichnet, dass** die Aufsteckschläuche (52) zu den Wicklungsenden (46) und/oder -anfängen (32) mittels einer Zentriervorrichtung (54) ausgerichtet werden, die in den jeweiligen Aufsteckschlauch (52) eingreift.

8. Verfahren nach Anspruch 7, **dadurch gekennzeichnet, dass** die Zentriervorrichtung (54) einen beweglichen Greifer (68) aufweist, mit welchem die Wicklungsenden (46) oder -anfänge (32) gegriffen und kompaktiert werden.

9. Verfahren nach Anspruch 7 oder 8, **dadurch gekennzeichnet, dass** die Aufsteckschläuche (52) vor dem Aufstecken auf eine bestimmte Länge konfektioniert und in einem Magazin (64) aufgenommen werden, durch welches die Position der Aufsteckschläuche (52) relativ zu der Zentriervorrichtung (54) definiert wird.

10. Verfahren nach einem der vorhergehenden Ansprüche, **dadurch gekennzeichnet, dass** die mit den Aufsteckschläuchen (52) umhüllten Wicklungsenden (46) und/oder -anfänge (32) in jeweils mehreren zweiten Positionshaltern (90 a, b, c, 92 a, b, c) mit Bezug auf den Rotor- oder Statorkörper (84) fixiert werden.

11. Vorrichtung zur Durchführung eines Verfahrens nach einem der vorhergehenden Ansprüche, mit folgenden Merkmalen:
- einer Drahtzuführeinrichtung (16) zum parallelen Zuführen von Einzeldrähten (14), die gemeinsam eine Spulenwicklung (12) für einen Stator oder Rotor eines Elektromotors bilden,
- einem Drahtwickler (28) mit Wickelschablonen (30), auf welchen die Spulenwicklungen (12) sukzessive gewickelt werden, wobei ein Schablonendrahtgreifer (34) zum Halten der Anfänge der Einzeldrähte an dem Drahtwickler (28) vorgesehen ist,
- einem Einziehwerkzeug (36) zur Aufnahme der Spulenwicklungen (12) nach dem Wickeln,
- einem Stator- (86) oder Rotorträger zur Aufnahme eines Stator- (84) oder Rotorkörpers,
- einer Übertragungsvorrichtung zum Übertragen der Spulenwicklungen (12) von dem Einziehwerkzeug (36) in den Stator- (84) oder Rotorkörper,
wobei weiterhin wenigstens eine Verbindungsvorrichtung vorgesehen ist, mit welcher die Drahtanfänge und/oder -enden der Einzeldrähte (14) miteinander zu Wicklungsenden (46) oder -anfängen (32) verbunden werden, wobei eine Zentriervorrichtung (54) zum Ausrichten und eine Aufsteckvorrichtung (56) zum Aufziehen von Aufsteckschläuchen (52) auf das jeweilige Wicklungsende (46) oder den jeweiligen Wicklungsanfang (32) vorgesehen ist.

12. Vorrichtung nach Anspruch 11, **dadurch gekennzeichnet, dass** die Verbindungsvorrichtung eine Einzeldrahtführung (22) im Bereich der Drahtzuführeinrichtung (16) aufweist, die um eine Drehachse parallel zur Zuführrichtung der Einzeldrähte (14) zum Drahtwickler (28) drehbar ist.

13. Vorrichtung nach Anspruch 11 oder 12, **dadurch gekennzeichnet, dass** in definierter Lage zu dem Einziehwerkzeug (36) erste Positionshalter (42, 44) für die Wicklungsenden (46) und Wicklungsanfänge (32) und in definierter Lage zu der Übertragungsvorrichtung zweite Positionshalter (90, 92) für die Wicklungsanfänge (32) und Wicklungsenden (46) vorgesehen sind.

14. Vorrichtung nach einem der Ansprüche 11 bis 13, **dadurch gekennzeichnet, dass** die Zentriervorrichtung (54) einen Greifer (68) zum Greifen und Kompaktieren der Wicklungsenden (46) oder Wicklungsanfänge (32) aufweist, der durch den Innendurchmesser der Aufsteckschläuche (52) durchführbar ist.

15. Vorrichtung nach einem der Ansprüche 11 bis 14, **dadurch gekennzeichnet, dass** die Zentriervorrichtung (54) wenigstens einen Mitnehmer (74) zum Greifen und Aufziehen oder Aufstecken der Aufsteckschläuche (52) auf die Wicklungsenden (46) oder -anfänge (32) aufweist.

16. Vorrichtung nach Anspruch 14, **dadurch gekennzeichnet, dass** der Greifer (68) eine Zangenvorrichtung (78) und ein axial zur Zangenvorrichtung (78) bewegliches Betätigungsrohr (80) aufweist, das durch axiales Zustellen die Zangenvorrichtung (78) in eine Schließstellung bewegt.

## Claims

1. Method for producing rotors and stators of electric motors including the tailoring of connecting wires, which has the following steps:
- winding the coil windings (12) consisting of several individual wires (14) on a wire winder (28), to which the individual wires (14) are supplied via a wire guide (18, 20, 22) from a wire supply unit (16),
- placing the coil windings (12) in an insertion tool (36),
- inserting the coil windings (12) into grooves of a stator body (84) or rotor body,
- phased combining of the individual wires (14)
- assembly of the connecting wires of the respective stator or rotor by means of slipping on slip-on tubes (52) by means of a centring device (54) and slip-on device (56),
**wherein** the individual wires (14) of each coil winding (12) in the region of the wire guide (18, 20, 22) are fixed next to one another to form winding ends (46) and winding beginnings (32), after the winding, the winding ends (46) and winding beginnings (32) of each coil winding (12) are fixed prior to or during the placing in first position holders (42, 44) arranged in specific positions with regard to the insertion tool, and when the coil windings (12) are drawn into the stator or rotor, the winding ends (46) and winding beginnings (32) are transferred from the first position holders (42, 44) into second position holders (90, 92) arranged in specific positions with regard to the stator body (84) or rotor body.

2. Method according to claim 1, **characterised in that** the slip-on tubes (52) are slipped onto the winding ends (46) and/or winding beginnings (32) before the coil windings (12) are inserted into the stator body (84) or rotor body.

3. Method according to claim 1 or 2, **characterised in that**, before the slip-on tubes (52) are slipped on, the individual wires (14) of the winding ends (46) and/or winding beginnings (32) are compacted to a diameter which is smaller than the inner diameter of the slip-on tubes (52).

4. Method according to any of the preceding claims, **characterised in that** the individual wires (14) are twisted together to form the winding ends (46) and/or winding beginnings (32).

5. Method according to any of the preceding claims, **characterised in that** in the region of the wire supply unit (16) the individual wires (14) are guided through an individual wire guide (22) which is rotatable about a rotational axis parallel to the wire guide direction.

6. Method according to any of the preceding claims, **characterised in that** the inner diameter of the slip-on tubes (52) is widened at the slip-on-side prior to being slipped onto the winding ends (46) and/or winding beginnings (32).

7. Method according to any of the preceding claims, **characterised in that** the slip-on tubes (52) are aligned with respect to the winding ends (46) and/or winding beginnings (32) by means of a centring device (54) which engages into the respective slip-on tube (52).

8. Method according to claim 7, **characterised in that** the centring device (54) has a movable gripper (68) with which the winding ends (46) or winding beginnings (32) are gripped and compacted.

9. Method according to claim 7 or 8,**characterised in that** the slip-on tubes (52) are tailored to a specified length prior to the slipping-on and are accommodated in a magazine (64) by means of which the position of the slip-on tubes (52) relative to the centring device (54) is defined.

10. Method according to any of the preceding claims, **characterised in that** the winding ends (46) and/or winding beginnings (32) sheathed with the slip-on tubes (52) are fixed in respectively several second position holders (90 a, b, c, 92 a, b,c) with regard to the rotor body or stator body (84).

11. Device for carrying out a method according to any of the preceding claims, having the following characteristics:
- a wire supply unit (16) for the parallel supply of individual wires (14), which together form a coil winding (12) for a stator or rotor of an electric motor,
- a wire winder (28) with winding templates (30), onto which the coil windings (12) are successively wound, wherein a template wire gripper (34) is provided for holding the beginnings of the individual wires on the wire winder (28),
- an insertion tool (36) for receiving the coil windings (12) after the winding,
- a stator carrier (86) or rotor carrier for receiving a stator body (84) or rotor body,
- a transfer device for transferring the coil windings (12) from the insertion tool (36) into the stator body (84) or rotor body,
**wherein** furthermore at least one connecting device is provided with which the wire beginnings and/or wire ends of the individual wires (14) are connected with one another to form winding ends (46) or winding beginnings (32), wherein
a centring device (54) for aligning, and a slip-on device (56) for slipping on slip-on tubes (52) onto the respective winding end (46) or the respective winding beginning (32), are provided.

12. Device according to claim 11, **characterised in that** the connecting device has an individual wire guide (22) in the region of the wire supply device (16) which is rotatable about a rotational axis parallel to the supply direction of the individual wires (14) to the wire winder (28).

13. Device according to claim 11 or 12, **characterised in that** first position holders (42, 44) for the winding ends (46) and winding beginnings (32) are provided in a defined position in regard to the insertion tool (36), and that second position holders (90, 92) for the winding beginnings (32) and winding ends (46) are provided in a defined position in regard to the transfer device.

14. Device according to any of claims 11 to 13, **characterised in that** the centring device (54) has a gripper (68) for gripping and compacting the winding ends (46) or winding beginnings (32) which can be guided through the inner diameter of the slip-on tubes (52).

15. Device according to any of claims 11 to 14, **characterised in that** the centring device (54) has at least one driver (74) for gripping and drawing on or slipping on the slip-on tubes (52) onto the winding ends (46) or winding beginnings (32).

16. Device according to claim 14, **characterised in that** the gripper (68) has a plier apparatus (78) and an actuating pipe (80), movable axially with respect to the plier apparatus (78), which moves the plier apparatus (78) into a closed position by means of axial approach.

## Revendications

1. Procédé de fabrication de rotors et de stators de moteurs électriques, incluant la confection de fils de jonction, comprenant les étapes ci-dessous consistant à :
- enrouler les enroulements en bobine (12) constitués de plusieurs fils individuels (14) sur un enrouleur de fil (28) auquel les fils individuels (14) sont amenés depuis une unité d'acheminement de fil (16) en passant par un guide-fil (18, 20, 22),
- déposer les enroulements en bobine (12) dans un outil d'insertion (36),
- insérer les enroulements en bobine (12) dans des gorges d'un corps de stator (84) ou d'un corps de rotor,
- rassembler les fils individuels (14) par phase,
- confectionner les fils de jonction du stator ou du rotor respectif grâce à l'emmanchement de tuyaux emmanchables (52) au moyen d'un dispositif de centrage (54) et d'un dispositif d'emmanchement (56),
**dans lequel** les fils individuels (14) de chaque enroulement en bobine (12) sont fixés les uns aux autres dans l'étendue du guide-fil (18, 20, 22) afin de former des extrémités d'enroulement (46) et des débuts d'enroulement (32), les extrémités d'enroulement (46) et les débuts d'enroulement (32) de chaque enroulement en bobine (12) sont fixés, après l'enroulement et avant ou pendant le dépôt, dans des premiers supports de position (42, 44) agencés dans des positions déterminées par rapport à l'outil d'insertion, et, lors de l'insertion des enroulements en bobine (12) dans le stator ou le rotor, les extrémités d'enroulement (46) et les débuts d'enroulement (32) sont transférés à partir des premiers supports de position (42, 44) jusque dans des seconds supports de position (90, 92) agencés dans des positions déterminées par rapport au corps de stator (84) ou au corps de rotor.

2. Procédé selon la revendication 1, **caractérisé en ce que** les tuyaux emmanchables (52) sont emmanchés sur les extrémités d'enroulement (46) et/ou les débuts d'enroulement (32) avant l'insertion des enroulements en bobine (12) dans le corps de stator (84) ou le corps de rotor.

3. Procédé selon la revendication 1 ou 2, **caractérisé en ce que,** avant l'emmanchage des tuyaux emmanchables (52), les fils individuels (14) des extrémités d'enroulement (46) et/ou des débuts d'enroulement (32) sont compactés jusqu'à un diamètre qui est inférieur au diamètre intérieur des tuyaux emmanchables (52).

4. Procédé selon l'une quelconque des revendications précédentes, **caractérisé en ce que** les fils individuels (14) sont torsadés les uns avec les autres pour former les extrémités d'enroulement (46) et/ou les débuts d'enroulement (32).

5. Procédé selon l'une quelconque des revendications précédentes, **caractérisé en ce que** les fils individuels (14) sont guidés dans l'étendue du dispositif d'acheminement de fil (16) grâce à un guide pour fils individuels (22) pouvant tourner autour d'un axe de rotation de manière parallèle à la direction de guidage de fil.

6. Procédé selon l'une quelconque des revendications précédentes, **caractérisé en ce que** le diamètre intérieur des tuyaux emmanchables (52) est élargi au niveau du côté d'emmanchage avant l'emmanchage sur les extrémités d'enroulement (46) et/ou les débuts d'enroulement (32).

7. Procédé selon l'une quelconque des revendications précédentes, **caractérisé en ce que** les tuyaux emmanchables (52) sont orientés vers les extrémités d'enroulement (46) et/ou les débuts d'enroulement (32) au moyen d'un dispositif de centrage (54) venant en prise dans le tuyau emmanchable (52) respectif.

8. Procédé selon la revendication 7, **caractérisé en ce que** le dispositif de centrage (54) présente un préhenseur mobile (68) avec lequel les extrémités d'enroulement (46) ou les débuts d'enroulement (32) sont saisi(e)s et compacté(e)s.

9. Procédé selon la revendication 7 ou 8, **caractérisé en ce que** les tuyaux emmanchables (52) sont confectionnés à une certaine longueur avant l'emmanchage et sont accueillis dans un magasin (64) grâce auquel la position des tuyaux emmanchables (52) par rapport au dispositif de centrage (54) est définie.

10. Procédé selon l'une quelconque des revendications précédentes, **caractérisé en ce que** les extrémités d'enroulement (46) et/ou les débuts d'enroulement (32) entouré(e)s par les tuyaux emmanchables (52) sont immobilisé(e)s dans plusieurs seconds supports de position (90a, b, c, 92a, b, c) respectifs par rapport au corps de rotor ou au corps de stator (84).

11. Dispositif de mise en oeuvre d'un procédé selon l'une quelconque des revendications précédentes, présentant les caractéristiques suivantes :
- un dispositif d'acheminement de fil (16) permettant l'acheminement parallèle de fils individuels (14) formant ensemble un enroulement en bobine (12) pour un stator ou un rotor d'un moteur électrique,
- un enrouleur de fil (28) avec des gabarits d'enroulement (30) sur lesquels les enroulements en bobine (12) sont enroulés de manière successive, dans lequel un préhenseur de fil de gabarit (34) est prévu afin de maintenir les débuts des fils individuels au niveau de l'enrouleur de fil (28),
- un outil d'insertion (36) permettant d'accueillir les enroulements en bobine (12) après l'enroulement,
- un support de stator (86) ou un support de rotor permettant d'accueillir un corps de stator (84) ou un corps de rotor,
- un dispositif de transfert permettant de transférer les enroulements en bobine (12) depuis l'outil d'insertion (36) jusque dans le corps de stator (84) ou le corps de rotor,
**dans lequel** au moins un dispositif de liaison est en outre prévu, avec lequel les débuts de fil et/ou les extrémités de fil des fils individuels (14) sont relié(e)s entre eux(elles) pour former des extrémités d'enroulement (46) ou des débuts d'enroulement (32), dans lequel
un dispositif de centrage (54) est prévu pour l'orientation et un dispositif d'emmanchage (56) est prévu pour l'enfilage de tuyaux emmanchables (52) sur l'extrémité d'enroulement (46) respective ou le début d'enroulement (32) respectif.

12. Dispositif selon la revendication 11, **caractérisé en ce que** le dispositif de liaison présente dans l'étendue du dispositif d'acheminement de fil (16) un guide pour fils individuels (22) pouvant tourner autour d'un axe de rotation de manière parallèle à la direction d'acheminement des fils individuels (14) vers l'enrouleur de fil (28).

13. Dispositif selon la revendication 11 ou 12, **caractérisé en ce que** des premiers supports de position (42, 44), se trouvant dans une position définie par rapport à l'outil d'insertion (36) et destinés aux extrémités d'enroulement (46) et aux débuts d'enroulement (32), et des seconds supports de position (90, 92), se trouvant dans une position définie par rapport au dispositif de transfert et destinés aux débuts d'enroulement (32) et aux extrémités d'enroulement (46), sont prévus.

14. Dispositif selon l'une quelconque des revendications 11 à 13, **caractérisé en ce que** le dispositif de centrage (54) présente un préhenseur (68) permettant de saisir et compacter les extrémités d'enroulement (46) ou les débuts d'enroulement (32) et pouvant être mis en oeuvre à travers le diamètre intérieur des tuyaux emmanchables (52).

15. Dispositif selon l'une quelconque des revendications 11 à 14, **caractérisé en ce que** le dispositif de centrage (54) présente au moins un dispositif d'entraînement (74) permettant de saisir et enfiler ou emmancher les tuyaux emmanchables (52) sur les extrémités d'enroulement (46) ou les débuts d'enroulement (32).

16. Dispositif selon la revendication 14, **caractérisé en ce que** le préhenseur (68) présente un dispositif de tenailles (78) et un tube d'actionnement (80), mobile axialement par rapport au dispositif de tenailles (78), qui déplace le dispositif de tenailles (78) dans une position de fermeture grâce à un ajustement axial.
